# EUROPEAN PATENT SPECIFICATION

(11) **EP 1 293 386 B1**
(45) Date of publication and mention of the grant of the patent: **30.03.2005**
(21) Application number: 02078609.1
(22) Date of filing: 03.09.2002
(51) Int. Cl.: B60R 9/06, B60D 1/06

(54) **Coupling device for coupling a load carrier to a towing hook of a vehicle**
Koppelvorrichtung zum Ankoppeln von einem Lastenträger an eine Anhängerkupplung eines Fahrzeugs
Dispositif d'accouplement pour accoupler un porte-charge à un crochet d'attelage d'un véhicule

(30) Priority: 13.09.2001 NL 1018947
(43) Date of publication of application: 19.03.2003
(73) Proprietor: Publiekrechtelijk Overheidslichaam Felua Groep, 7334 AC Apeldoorn (NL)
(72) Inventor: Vreeling, Gerhardus Nicolaas, 7391 PL Twello (NL)
(74) Representative: Dokter, Hendrik Daniel

(56) References cited:
- EP-A- 0 710 588
- DE-A- 3 020 367
- DE-A- 4 325 147
- DE-U- 9 303 510
- FR-A- 2 688 178
- US-A- 4 412 635

## Description

The invention relates to a coupling device for coupling a load carrier to a towing hook of a vehicle, which towing hook comprises a ball carried on a neck, comprising at least two engaging members coupled to the load carrier and for arranging releasably around the ball, which engaging members can be operated by a lever, which lever is formed by the load carrier.

From Netherlands patent application no. 9400115 is known a load carrier for transporting cycles. This known load carrier comprises a coupling device with pivotally mounted link bars for pressing engaging members onto a ball, which link bars are operated by a threaded pin provided with a control knob.

It is seen as a drawback of the known load carrier that during coupling hereof it must be held fixedly on a towing hook until the threaded pin is fully tightened. This implies that if the load carrier must be coupled by one person, this person must hold the load carrier with one hand since he needs the other hand to tighten the threaded pin.

The French patent application no. 2 688 178 discloses a coupling device for coupling a load carrier to a towing hook of a vehicle, comprising at least two engaging members coupled to the load carrier and for arranging releasably around the ball, which engaging members can be operated by a lever. This lever itself is not arranged as a load carrier, instead it constitutes a traverse which is arranged for receiving a frame, which frame is designed to receive a load. The traverse is to be locked on the the frame by means of locking means entering the frame. The load is in general to be disposed with an auxiliary means like a cycle carrier or a luggage trunk.

It is an object of the invention to provide a coupling device with which a load carrier can be coupled to a towing hook of a vehicle in ergonomically advantageous manner, wherein during the coupling the load carrier can be carried and manipulated by one person with both hands.

It is also an object to provide a coupling device with which a load carrier coupled to a towing hook can be locked in simple, rapid and reliable manner.

It is a further object to provide a coupling device with which a load carrier coupled to a towing hook can be uncoupled in rapid and simple manner.

These objectives are achieved, and other advantages gained, with a coupling device of the type stated in the preamble, which according to the invention is provided with two side pieces for arranging on two sides of a towing hook, between which side pieces a first engaging member is received, which side pieces are coupled pivotally to the load carrier, and with rods which are each coupled pivotally at a first outer end to the load carrier and are coupled pivotally at a second outer end to at least one of the engaging members, wherein the pivot axes extend in each case in transverse direction of the vehicle, which side pieces and rods co-act in a manner such that, in an oblique position of the load carrier relative to a horizontal plane and an upward position thereof relative to the engaging members, a space is provided between the engaging members to receive the ball, and in a substantially horizontal position of the load carrier the engaging members arranged around a ball engage this ball with force.

The second engaging member comprises for instance a stamp displaceable in a holder in a direction counter to a spring force.

In a very favourable embodiment the coupling device is provided with locking means for locking the load carrier in a substantially horizontal position in which the engaging members arranged around a ball engage this ball with force.

These locking means for instance comprise a locking rod extending through slots in the side pieces, which locking rod is displaceable in the longitudinal direction of these slots and along wedge-shaped guide members fixedly connected to the load carrier, which guide members confine the locking rod in an outer end of the respective slots and thereby lock the side pieces against pivoting relative to the load carrier.

The latter locking means further comprise for instance a locking member for locking a locking rod confined in said outer end of the respective slots against displacement in said outer end, which locking member is preferably coupled fixedly to a handgrip extending outside the load carrier.

The invention will be elucidated hereinbelow on the basis of an embodiment, with reference to the drawings.

In the drawings:
Fig. 1 shows in perspective view an embodiment of a coupling device according to the invention above a part of a towing hook, in a situation where the load carrier extends obliquely upward relative to a horizontal plane and relative to the engaging members,
Fig. 2 is an exploded view of the coupling device shown in fig. 1,
Fig. 3 is a longitudinal sectional view of the coupling device shown in fig. 1,
Fig. 4 is a perspective view of the coupling device shown in fig. 1 in a situation where the load carrier extends horizontally, and
Fig. 5 is a longitudinal sectional view of the coupling device shown in fig. 4.

Corresponding components are designated in the figures with the same reference numerals.

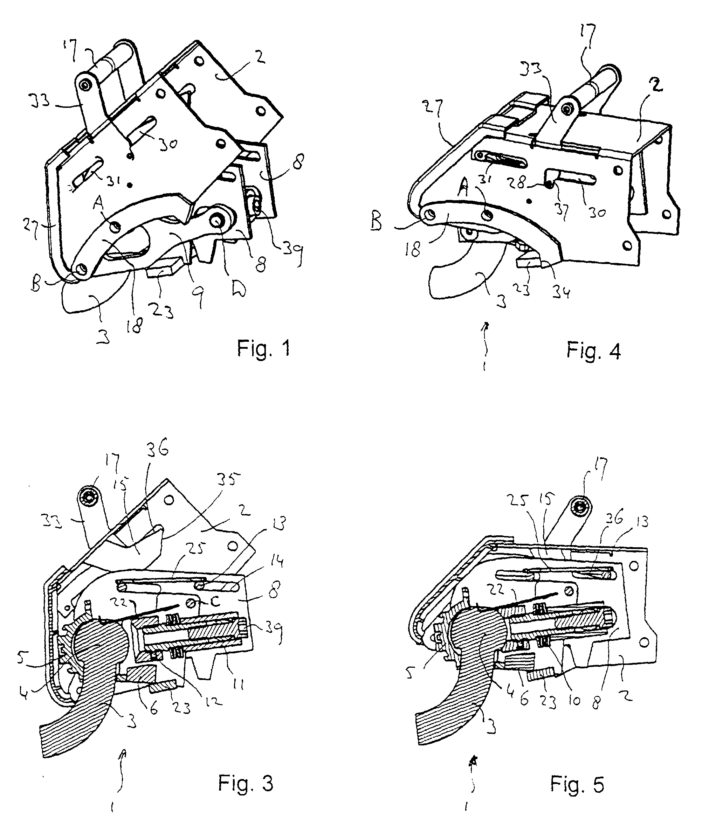

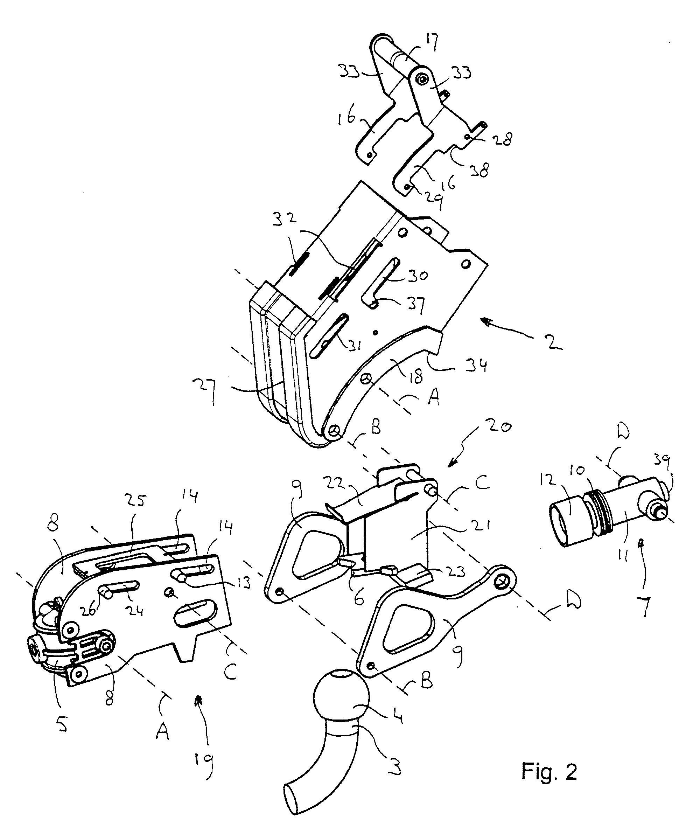

Fig. 1 shows a coupling device 1 above a part of a towing hook 3, in a situation where the load carrier, of which a part of a U-shaped carrier beam 2 is shown, extends obliquely upward. The other components are elucidated in the description of fig. 2.

Fig. 2 shows the U-shaped carrier beam 2 which is directed obliquely upward and provided on its two opposite sides with strengthening strips 18 in which pivot axes A, B are mounted. Pivotally mounted on pivot axis A in carrier beam 2 is a tilting member 19 which is assembled from, among other elements, side pieces 18 which are fixedly connected being on both sides to a dish-shaped element 5, the hollow inner side of which corresponds with the spherical shape of a ball 4. A holder 20 is pivotally mounted on a pivot axis C in tilting member 19, which holder is assembled from side plates 21, a spring leaf 22 on the top side, a forked part 6 on the underside of which the form of the forward directed side (on the left in the figure) corresponds with that of the periphery of neck 3 of the towing hook, and locking parts 23 on the underside. In carrier beam 2 two pull rods 9 are mounted pivotally on a pivot axis B, between which rods a pressing member 7 is mounted pivotally on a pivot axis D, this member being assembled from a stamp 12, a cylindrically formed part 39 of which is received in a holder 11. Stamp 12 can be pushed into holder 11 while overcoming a force produced by a compression spring 10. Locking members 16, connected to a handgrip 17 by wings 33, are received displaceably in the slots 30, 31 in carrier beam 2 by means of protruding guides 28, 29, wherein wings 33 protrude through slots 32 in the upper side of carrier beam 2. Carrier beam 2 is closed at its front by a plastic cap 27. The figure further shows parallel directed slots 14, 24 in tilting member 19, in which slots respectively a locking rod 13 and a guide rod 26, connected by a plate 25, are displaceably received.

Fig. 3 shows coupling device 1 in a longitudinal sectional view, above a part of a towing hook 3, 4, in a position wherein load carrier 2 extends obliquely upward and wherein pressing members 5, 6, 7 are not yet locked. In addition to the above stated components can be seen a wedge-shaped guide 15 with underside 35 and upper side 36 extending from the top side of carrier beam 2.

Fig. 4 shows a perspective view of coupling device 1 on a towing hook 3, 4 in a situation where load carrier 2 extends horizontally and wherein pressing members 5, 6, 7 are locked.

Fig. 5 is a longitudinal sectional view of coupling device 1 in the situation shown in fig. 4.

The operation of the shown coupling device 1 is as follows.

When load carrier 2 is lifted up in an obliquely upward directed position (fig. 1) using handgrip 17, wherein guides 28, 29 are situated at the rear of slots 30, 31 (top right in fig. 1), a space is present between dish 5 on the one side and fork 6 and pressing member 7 on the other, in which space can be received the ball 4 of a towing hook.

When in said oblique position the load carrier 2 is lowered above the ball 4 of a towing hook into a situation in which the hollow inner side of dish 5 rests against ball 4 (fig. 3), holder 20 tilts about axis B as soon as leaf spring 22 comes into contact with the top side of ball 4, as a result of which the fork 6 is pressed against neck 3 of the towing hook, and locking member 16 with handgrip 17 is pulled by a draw spring (not shown) into a situation wherein guides 28, 29 are situated at the front (bottom left in fig. 3) of slots 30, 31. Locking rod 13 with plate 25 and guide rod 26 is pulled forward (to the left in fig. 3) in respective slots 14, 24 by a draw spring (not shown).

When carrier beam 2 is then lowered to a horizontal position (figures 4 and 5), carrier beam 2 tilts relative to tilting member 19, as a result of which the pressing member 7 is pulled by the rods 9 against the ball 4 which is confined between stamp 12 of pressing member 7 and dish 5 by the force of compression spring 10. By tilting the carrier beam 2 the locking parts 23 of holder 20 are locked by the rearmost inner sides 34 of the strengthening strips 18 on carrier beam 2. During the tilting movement of carrier beam 2 the locking rod 13 is pressed rearward (to the right in fig. 3) in slots 14 by the underside 35 of wedge-shaped guides 15, until locking rod 13 drops just behind the tip of the wedge-shaped guides 15 and is confined in slots 14 by the top side 36 of guides 15. In this latter situation space is created just behind locking rod 13 for passage in downward direction of the locking members 16 which are pulled with guides 28 out of slots 30 and into vertical short transverse slots 37 by a draw spring (not shown), as a result of which the locking rods 13 are fixed relative to wedge-shaped guides 15 by edges 38 of locking members 16, carrier beam 2 is fixed relative to tilting member 19 and thus locked in its horizontal position. In order to unlock carrier beam 2 the locking members 16 have to be released by pulling them upward using handgrip 17, whereafter carrier beam 2 is freely tiltable relative to tilting member 19, and rods 9 press the pressing member 7 in rearward direction (to the right in the figures).

## Claims

1. Coupling device (1) for coupling a load carrier (2) to a towing hook (3, 4) of a vehicle, which towing hook (3, 4) comprises a ball (4) carried on a neck (3), comprising at least two engaging members (5, 6, 7) coupled to the load carrier (2) and for arranging releasably around the ball (4), which engaging members (5, 6, 7) can be operated by a lever, which lever is formed by the load carrier (2), **characterized in that** it is provided with two side pieces (8) for arranging on two sides of a towing hook (3, 4), between which side pieces a first engaging member (5) is received, which side pieces (8) are coupled pivotally (A) to the load carrier (2), and with rods (9) which are each coupled pivotally (B) at a first outer end to the load carrier (2) and are coupled pivotally (D) at a second outer end to a second engaging member (7), wherein the pivot axes (A, B, D) extend in each case in transverse direction of the vehicle, which side pieces (8) and rods (9) co-act in a manner such that, in an oblique position of the load carrier (2) relative to a horizontal plane and an upward position thereof relative to the engaging members (5, 6, 7), a space is provided between the engaging members (5, 6, 7) to receive the ball (4), and in a substantially horizontal position of the load carrier (2) the engaging members (5, 6, 7) arranged around a ball (4) engage this ball (4) with force.

2. Coupling device (1) as claimed in claim 1, **characterized in that** the second engaging member (7) comprises a stamp (12, 39) displaceable in a holder (11) in a direction counter to a spring force (10).

3. Coupling device (1) as claimed in either of the claims 1-2, **characterized in that** it is provided with locking means (13-16) for locking the load carrier (2) in a substantially horizontal position in which the engaging members (5, 6, 7) arranged around a ball (4) engage this ball (4) with force.

4. Coupling device (1) as claimed in claim 3, **characterized in that** the locking means (13-16) comprise a locking rod (13) extending through slots (14) in the side pieces (8), which locking rod (13) is displaceable in the longitudinal direction of these slots (14) and along wedge-shaped guide members (15) fixedly connected to the load carrier (2), which guide members (15) confine the locking rod (13) in an outer end of the respective slots (14) and thereby lock the side pieces (8) against pivoting (a) relative to the load carrier (2) .

5. Coupling device (1) as claimed in claim 4, **characterized in that** the locking means (13-16) comprise a locking member (16) for locking a locking rod (13) confined in said outer end of the respective slots (14) against displacement in said outer end.

6. Coupling device (1) as claimed in claim 5, **characterized in that** the locking member (16) is coupled fixedly to a handgrip (17) extending outside the load carrier (2).

## Patentansprüche

1. Kuppelvorrichtung (1) zum Kuppeln eines Lastenträgers (2) an eine Anhängerkupplung (3, 4) eines Fahrzeugs, und diese Anhängerkupplung umfasst eine auf einem Hals (3) getragene Kugel (4), und diese Kuppelvorrichtung (1) umfasst zumindest zwei mit dem Lastenträger (2) gekuppelte und trennbar um die Kugel (4) herum anzubringende Eingriffglieder (5, 6, 7), und diese Eingriffglieder (5, 6, 7) können mit einem Hebel, der durch den Lastenträger (2) geformt wird, betätigt werden, **dadurch gekennzeichnet, dass** sie zum Anbringen auf zwei Seiten einer Anhängerkupplung (3, 4) mit zwei Wangen (8) versehen ist, zwischen die ein erstes Eingriffglied (5) aufgenommen wird, und diese Wangen (8) sind drehbar (A) an den Lastenträger (2) gekuppelt, und mit Stangen (9), die jeweils an einem ersten äußeren Ende drehbar (B) an den Lastenträger (2) gekuppelt sind und an einem zweiten äußeren Ende drehbar (D) an ein zweites Eingriffglied (7) gekuppelt sind, wobei die Drehachsen (A, B, D) sich jeweils in Querrichtung zum Fahrzeug erstrecken, und diese Wangen (8) und Stangen (9) auf solche Weise zusammenarbeiten, dass in einem in Bezug auf eine Horizontalebene schrägen Stand und einem in Bezug auf die Eingriffglieder (5, 6, 7) aufwärts gerichteten Stand des Lastenträgers (2) zwischen den Eingriffgliedern (5, 6, 7) Platz geschaffen wird, um die Kugel (4) aufzunehmen, und in einem im Wesentlichen horizontalen Stand des Lastenträgers (2) die um eine Kugel (4) herum angebrachten Eingriffglieder (5, 6, 7) diese Kugel (4) mit Kraft greifen.

2. Kuppelvorrichtung (1) nach Anspruch 1, **dadurch gekennzeichnet, dass** das zweite Eingriffglied (7) einen in einem Halter (11) in Gegenrichtung zu einer Federkraft (10) verschiebbaren Stempel (12, 39) umfasst.

3. Kuppelvorrichtung (1) nach einem der Ansprüche 1-2, **dadurch gekennzeichnet, dass** sie mit Sicherungsmitteln (13-16) zur Sicherung des Lastenträgers (2) in einem im Wesentlichen horizontalen Stand, in dem die um die Kugel (4) herum angebrachten Eingriffglieder (5, 6, 7) diese Kugel (4) mit Kraft greifen, versehen ist.

4. Kuppelvorrichtung (1) nach Anspruch 3, **dadurch gekennzeichnet, dass** die Sicherungsmittel (13-16) eine Sicherungsstange (13) umfassen, die sich durch Schlitze (14) in den Wangen (8) erstreckt, und diese Sicherungsstange (13) lässt sich in Längsrichtung dieser Schlitze (14) und entlang keilförmigen, fest mit dem Lastenträger (2) verbundenen Führungsgliedern (15) verschieben, und diese Führungsglieder (15) schließen die Sicherungsstange (13) in einem äußeren Ende der jeweiligen Schlitze (14) ein und sichern die Wangen (8) damit gegen Drehen (a) in Bezug auf den Lastenträger (2).

5. Kuppelvorrichtung (1) nach Anspruch 4, **dadurch gekennzeichnet, dass** die Sicherungsmittel (13-16) ein Sicherungsglied (16) zur Sicherung einer in besagtem äußeren Ende der jeweiligen Schlitze (14) eingeschlossenen Sicherungsstange (13) gegen Verschieben in besagtem äußeren Ende umfassen.

6. Kuppelvorrichtung (1) nach Anspruch 5, **dadurch gekennzeichnet, dass** das Sicherungsglied (16) fest mit einem sich außerhalb des Lastenträgers (2) erstreckenden Handgriff (17) gekuppelt ist.

## Revendications

1. Dispositif d'accouplement (1) pour accoupler un porte-charge (2) à un crochet d'attelage (3, 4) d'un véhicule, ledit crochet d'attelage (3, 4) comprenant une boule (4) portée sur un col (3), comprenant au moins deux éléments d'engagement (5, 6, 7) accouplés au porte-charge (2) et à arranger d'une façon détachable autour de la boule (4), lesdits éléments d'engagement (5, 6, 7) pouvant être actionnés par un levier, ledit levier étant formé par le porte-charge (2), **caractérisé en ce qu'**il est pourvu de deux pièces latérales (8) à arranger sur les deux côtés d'un crochet d'attelage (3, 4), un premier élément d'engagement (5) étant reçu entre lesdites pièces latérales, lesdites pièces latérales (8) étant accouplées d'une façon pivotante (A) au porte-charge (2), et de tiges (9) accouplées chacune d'une façon pivotante (B) à une première extrémité extérieure au porte-charge (2) et accouplées d'une façon pivotante (D) à une deuxième extrémité extérieure à un deuxième élément d'engagement (7), dans lequel les axes de pivotement (A, B, D) s'étendent dans chaque cas dans une direction transversale du véhicule, lesdites pièces latérales (8) et lesdites tiges (9) coopérant d'une manière telle que, dans une position oblique du porte-charge (2) par rapport à un plan horizontal et dans une position orientée vers le haut de celui-ci par rapport aux éléments d'engagement (5, 6, 7), un espace soit créé entre les éléments d'engagement (5, 6, 7) destiné à recevoir la boule (4), et que, dans une position essentiellement horizontale du porte-charge (2), les éléments d'engagement (5, 6, 7) arrangés autour d'une boule (4) engagent cette boule (4) avec force.

2. Dispositif d'accouplement (1) selon la revendication 1, **caractérisé en ce que** le deuxième élément d'engagement (7) comprend un tampon (12, 39) pouvant être déplacé dans un support (11) dans une direction opposés à une force de ressort (10).

3. Dispositif d'accouplement (1) selon l'une ou l'autre des revendications 1 et 2, **caractérisé en ce qu'**il comprend des moyens de verrouillage (13-16) permettant de verrouiller le porte-charge (2) dans une position essentiellement horizontale dans laquelle les éléments d'engagement (5, 6, 7) arrangés autour d'une boule (4) engagent cette boule (4) avec force.

4. Dispositif d'accouplement (1) selon la revendication 3, **caractérisé en ce que** les moyens de verrouillage (13-16) comprennent une tige de verrouillage (13) s'étendant à travers des fentes (14) dans les pièces latérales (8), ladite tige de verrouillage (13) pouvant être déplacée dans la direction longitudinale de ces fentes (14) et le long d'éléments de guidage en forme de coin (15) connectés fixement au porte-charge (2), lesdits éléments de guidage (15) enserrant la tige de verrouillage (13) dans une extrémité extérieure des fentes respectives (14) et empêchant de ce fait les pièces latérales (8) de pivoter (a) par rapport au porte-charge (2).

5. Dispositif d'accouplement (1) selon la revendication 4, **caractérisé en ce que** les moyens de verrouillage (13-16) comprennent un élément de verrouillage (16) permettant de verrouiller une tige de verrouillage (13) enserrée dans ladite extrémité extérieure des fentes respectives (14) contre le déplacement dans ladite extrémité extérieure.

6. Dispositif d'accouplement (1) selon la revendication 5, **caractérisé en ce que** l'élément de verrouillage (16) est couplé fixement à une poignée (17) s'étendant à l'extérieur du porte-charge (2).
